# EUROPEAN PATENT APPLICATION

(11) **EP 2 371 598 A1**
(43) Date of publication of application: **05.10.2011**
(21) Application number: 11159521.1
(22) Date of filing: 24.03.2011
(51) Int. Cl.: B60J 7/16

(54) **Canopy for utility vehicle**

(30) Priority: 24.03.2010 AU 2010201165
(71) Applicant: ARB Corporation Limited, Kilsyth Victoria 3137 (AU)
(72) Inventor: Smith, Gavin, Kilsyth, Victoria 3137 (AU)
(74) Representative: Fiesser, Gerold Michael

(57) **Abstract**

A canopy for a utility vehicle having cabin C for occupants and a load carrying region L, extending rearwardly from the cabin C, and having an upper edge or rim R, comprising a shaped enclosure 10, 12 adapted for mounting on the upper edge or rim R and shaped to extend above the upper edge or rim R and over the load carrying region to allow the carriage of enclosed loads which extend above the upper edge or rim R, said enclosure 10, 12 being mounted in use for hinged movement with respect to the vehicle in which the enclosure moves in an arcuate path which avoids contact between the enclosure and a cabin C of the utility vehicle to provide access to the load carrying region L over a substantial portion of the upper edge or rim R. (Figure 2)

## Description

### TECHNICAL FIELD

This invention relates to canopies for utility vehicles.

### BACKGROUND ART

It is known to fit a canopy to enclose the load carrying region of a utility vehicle. Such canopies are usually formed as a rigid molding having windows and a rear closure door providing access for loading and unloading the enclosed space. Such closure doors are relatively small and therefore restrict access to the enclosed space.

It is also known to close the load carrying region of a utility vehicle by means for a flat tonneau-type cover which is hinged to allow access to the enclosed region. However, such covers, being flat, restrict the load carrying capacity of the utility vehicle to the volume of the load carrying region.

It is an object of the present invention to provide an improved canopy for a utility vehicle in which the problems outlined above are at least ameliorated.

### DISCLOSURE OF THE INVENTION

In one aspect, the invention provides a canopy for a utility vehicle having cabin for occupants and a load carrying region, extending rearwardly from the cabin, and having an upper edge or rim, comprising a shaped enclosure adapted for mounting on the upper edge or rim and shaped to extend above the upper edge or rim and over the load carrying region to allow the carriage of enclosed loads which extend above the upper edge or rim, said enclosure being mounted in use for hinged movement with respect to the vehicle in which the enclosure moves in an arcuate path which avoids contact between the enclosure and a cabin of the utility vehicle to provide access to the load carrying region over a substantial portion of the upper edge or rim.

In one form the canopy includes a first canopy portion shaped to form an open enclosure adapted to be secured to the utility vehicle adjacent the cabin of the utility vehicle, and a second canopy portion attached to the first portion by hinging means and shaped to co-operate with the first portion and the upper edge or rim of the load carrying region to enclose the load carrying region, said hinged attachment allowing the second portion to be hinged from a closed position to an open position in which a substantial part of the upper edge or rim of the load carrying region is accessible for loading and unloading.

In one form, the hinging means functions to move the second portion away from engagement with the first portion in said arcuate path to an elevated position which partly overlies the first portion so as to avoid contact between the second portion and the cabin of the vehicle to thereby provide access to the load carrying region over a substantial portion of the upper edge or rim.

In a preferred form, the hinging means comprises a four bar hinge mechanism carried by mounting brackets secured to the first and second portions. One or more air struts may be adapted for mounting at one end to means adjacent the upper edge or rim, and at the other end to a mounting bracket on the second portion, to assist in opening and controlled closing of the second portion.

The second portion may be provided with latching means adapted to co-operate with means mounted near the upper edge or rim to releaseably hold the second portion in its closed position against the first portion and the upper edge or rim.

An upper region of the first portion is in use adjacent a roof of the cabin of the utility vehicle, the second portion in use engaging first portion just below the upper region of the first portion to allow for the mounting of an elevated stop light above the second portion.

### BRIEF DESCRIPTION OF THE DRAWINGS

Other preferred features will become apparent from the following description of an embodiment of the invention taken in conjunction with the accompanying drawings, in which:

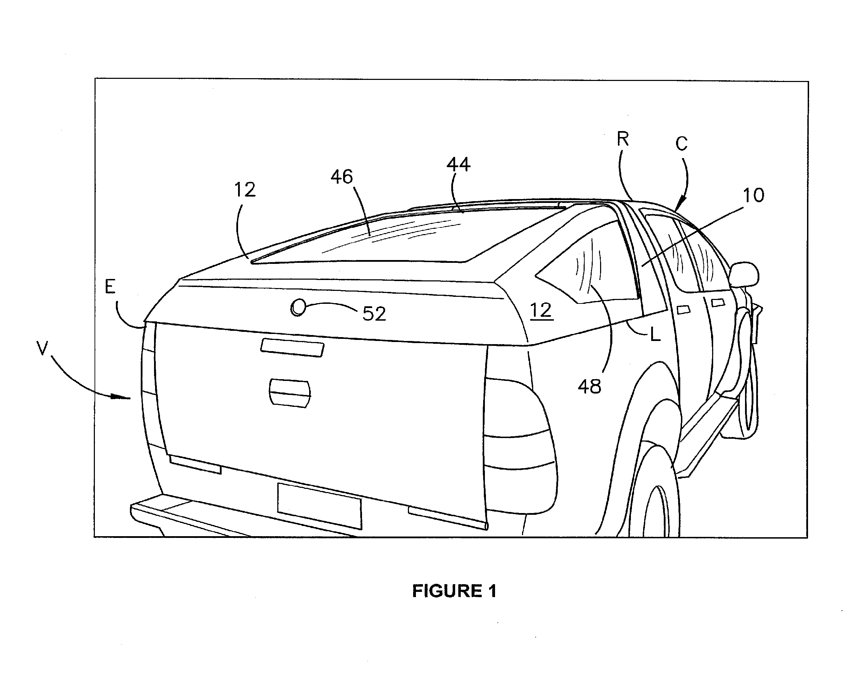

Fig. 1 is a rear perspective of a utility vehicle with a canopy according to an embodiment fitted over the load carrying region of the vehicle;

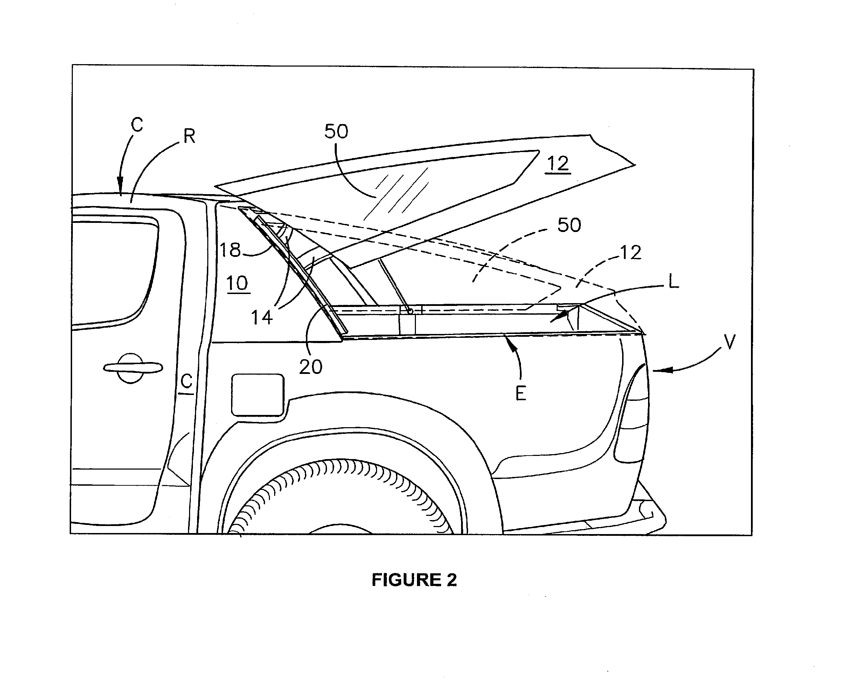

Fig. 2 is a side elevation showing the canopy in the open position, the closed position being illustrated in broken outline;

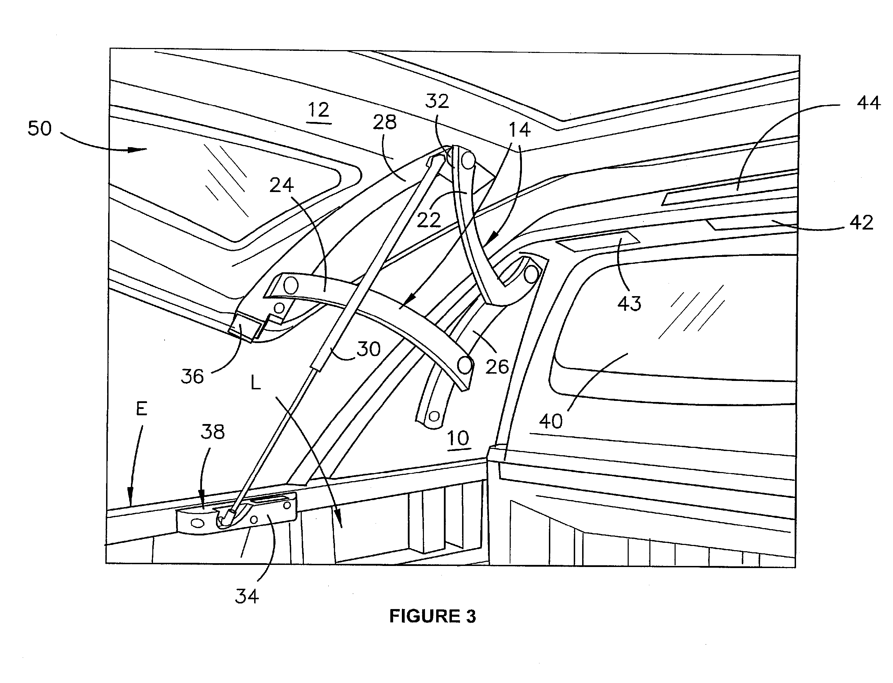

Fig. 3 is a rear perspective within the canopy showing the hinge mechanism and the air strut; and,

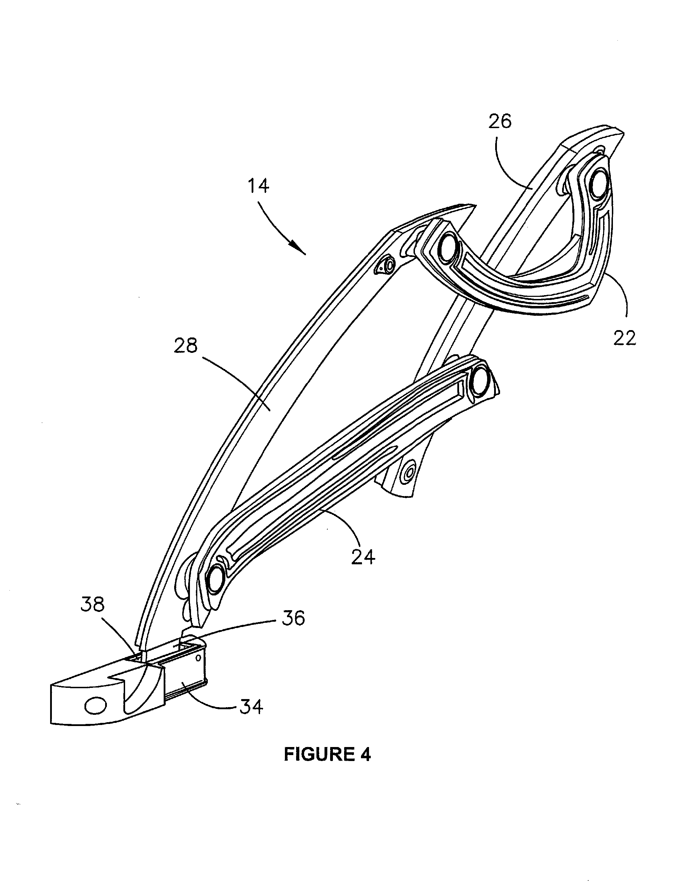

Fig. 4 is an enlarged perspective view of the hinge mechanism.

### MODES FOR CARRYING OUT THE INVENTION

The canopy embodying the invention is formed from a first canopy portion 10 and a second canopy portion 12 which is hingedly connected to the first portion 10 by hinge means 14 on either side of the canopy portion 12 which facilitate arcuate movement of the second portion 12 from a closed position in which the first and second portions enclose the load carrying region L of the utility vehicle V, to an open position in which the second portion 12 is angularly elevated with respect to an upper edge or rim E of the load carrying region L to allow access to the load carrying region L over a substantial portion of the upper edge or rim E.

The first canopy portions 10 is formed as a twin skin moulding from ABS resin or the like shaped to define a rearwardly open enclosure positioned in use adjacent a cabin C of the utility vehicle V and extending from a roof R to the upper edge or rim E of the load carrying region L of the vehicle V.

The rearward opening is defined by a flat sealing face 18 and a lip 20 which locates the second canopy portion 12 in the closed position. It will be appreciated that a sealing strip (not shown) extending around the front edge of the second canopy portion 12 will provide a seal against face 18, in the closed position. Similar seals will be provided on the lower edge of the second canopy portion 12 for sealing against the rim E.

The hinging means 14 each comprise a pair of shaped hinged bars 22 and 24 which are pivotally mounted at one end on a mounting bracket 26 secured to the inner skin of the first canopy portion 10 and are pivotally mounted at the other end to a mounting bracket 28 secured to the inner skin of the second canopy portion 12 as illustrated. In each case, the mounting brackets 26 and 28 are secured in a known manner to threaded plates secured between the inner and outer skins of the respective portions 10 and 12.

The hinge means further include air struts 30 pivotally attached at one end to mounting ears 32 on the mounting bracket 28 and at the other end to a mounting assembly 34 secured to a down-turned portion of the rim E as illustrated. These air struts 30 operate in the usual way to control the opening and closing of the second portion 12.

The mounting plates 28 include a tongue 36 projecting from the lower end of the plates 28 and positioned to engage a nylon or like socket 38 carried by the mounting brackets 34. This engagement ensures that the second canopy portion 12 is properly located with the rim E when in the closed position.

The first canopy portion 10 includes a central window 40 of suitable transparent material aligned with the rear window of the cabin C of the vehicle V. The first canopy portion 10 also includes an internal light 52 and an elevated stop light 44 which is visible when the second canopy portion 12 is in the closed position. Air vents 43 allow air into the first canopy portion 10 and when the second canopy portion 12 is closed and the vehicle is in motion a positive air pressure is created inside the canopy to assist in excluding dust from entering the closed canopy.

The second canopy portion 12 is also provided with a top window 46 and side windows 48 and 50. A central lock release 52 that operates a known locking bar (not shown) carrying known rotary latches (not shown) at either end adapted to engage rigid loops (not shown) secured to the vehicle, is also carried by the second canopy portion 12.

It will be appreciated that the windows 40, 46, 48 and 50 not only provide visibility but also increase the rigidity of the respective canopy portions 10 and 12.

The improved canopy according to the described embodiment provides a functional and aesthetically pleasing accessory for attachment to a utility vehicle to increase the load capacity of the load carrying region L of the vehicle V whilst providing improved access to the load carrying region L over a substantial portion of the upper edge or rim E of the load carrying region.

## Claims

1. A canopy for a utility vehicle having cabin for occupants and a load carrying region, extending rearwardly from the cabin, and having an upper edge or rim, comprising a shaped enclosure adapted for mounting on the upper edge or rim and shaped to extend above the upper edge or rim and over the load carrying region to allow the carriage of enclosed loads which extend above the upper edge or rim, said enclosure being mounted in use for hinged movement with respect to the vehicle in which the enclosure moves in an arcuate path which avoids contact between the enclosure and a cabin of the utility vehicle to provide access to the load carrying region over a substantial portion of the upper edge or rim.

2. The canopy of claim 1, wherein the canopy includes a first canopy portion shaped to form an open enclosure adapted to be secured to the utility vehicle adjacent the cabin of the utility vehicle, and a second canopy portion attached to the first portion by hinging means and shaped to co-operate with the first portion and the upper edge or rim of the load carrying region to enclose the load carrying region, said hinged attachment allowing the second portion to be hinged from a closed position to an open position in which a substantial part of the upper edge or rim of the load carrying region is accessible for loading and unloading.

3. The canopy of claim 1 or claim 2, wherein the hinged movement functions to move the second portion away from engagement with the first portion in an arcuate path to an elevated position which partly overlies the first portion so as to avoid contact between the second portion and the cabin of the vehicle to thereby provide access to the load carrying region over a substantial portion of the upper edge or rim.

4. The canopy of claim 2 or claim 3 when appended to claim 2, wherein the hinging means comprises a four bar hinge mechanism carried by mounting brackets secured to the first and second portions.

5. The canopy of claim 4, further comprising one or more air struts adapted for mounting at one end to means adjacent the upper edge or rim, and at the other end to the mounting bracket on the second portion, to assist in opening and controlled closing of the second portion.

6. The canopy of claim 5, wherein the second portion is provided with latching means adapted to co-operate with means mounted near the upper edge or rim to releaseably hold the second portion in its closed position against the first portion and the upper edge or rim.

7. The canopy of any one of claims 2 to 6, wherein an upper region of the first portion is in use adjacent a roof of the cabin of the utility vehicle, the second portion in use engaging first portion just below the upper region of the first portion to allow for the mounting of an elevated stop light above the second portion.

8. The canopy of any one of claims 2 to 7, wherein the hinging means substantially as described with reference to Figures 3 and 4 of the accompanying drawings.

9. A canopy substantially as described with reference to the accompanying drawings.
